# DEMANDE DE BREVET EUROPEEN

(11) **EP 2 063 514 A1**
(43) Date de publication de la demande: **27.05.2009**
(21) Numéro de dépôt: 08169799.7
(22) Date de dépôt: 24.11.2008
(51) Int. Cl.: H02K 1/06, H02K 1/17, H02K 23/04

(54) **Stator pour machine électrique tournante, notamment un démarreur**

(30) Priorité: 26.11.2007 FR 0759292
(71) Demandeur: VALEO EQUIPEMENTS ELECTRIQUES MOTEUR, 94046 Créteil Cedex (FR)
(72) Inventeur: Bocquet, Chantal, 69006 Lyon (FR)
(74) Mandataire: Tran, Chi-Hai

(57) **Abrégé**

L'invention concerne un stator pour machine électrique tournante, notamment un démarreur de véhicule automobile, comportant :
- une culasse,
- au moins une structure aimantée monobloc portée par la culasse et comportant :
o au moins une première portion aimantée réalisée dans un premier matériau, notamment un matériau ferromagnétique dur, et apte à générer un champs magnétique,
o au moins une deuxième portion de dérivation de flux réalisée dans un deuxième matériau, notamment un matériau ferromagnétique doux, différent du premier.

## Description

L'invention concerne un stator pour machine électrique tournante, notamment un démarreur de véhicule automobile.

La demande de brevet EP 1 211 778 décrit un démarreur de véhicule automobile comportant un stator, encore appelé inducteur. Ce stator est pourvu d'une culasse sur la paroi intérieure de laquelle sont disposés une pluralité d'aimants permanents capables de générer un champs magnétique pour entraîner en rotation un rotor, encore appelé induit, comprenant un bobinage alimenté pendant une phase de démarrage. Ce rotor est solidaire d'un lanceur apte à entraîner le moteur à combustion du véhicule automobile pour le démarrer. Des pièces supplémentaires sont prévues sur un côté de chacun des aimants permanents pour dériver le flux magnétique, notamment de manière à protéger l'inducteur contre le phénomène de démagnétisation et augmenter la vitesse de rotation à vide du démarreur. Ces pièces supplémentaires, encore appelées *shunt,* sont indépendantes des aimants permanents, et sont mises côte à côte avec ces aimants lors de leur montage sur la culasse.

L'invention vise notamment à améliorer ce type de stator.

L'invention a ainsi pour objet un stator pour machine électrique tournante, notamment un démarreur de véhicule automobile, comportant :
- une culasse,
- au moins une structure aimantée monobloc portée par la culasse et comportant :
   o au moins une première portion aimantée réalisée dans un premier matériau, notamment un matériau ferromagnétique dur, et apte à générer un champs magnétique,
   o au moins une deuxième portion de dérivation de flux réalisée dans un deuxième matériau, notamment un matériau ferromagnétique doux, différent du premier.

Grâce à l'invention, du fait que la structure aimantée soit monobloc, sa mise en place sur le stator, ou inducteur, est simplifiée.

En particulier, dans l'invention, la structure aimantée monobloc peut remplacer deux pièces distinctes, à savoir l'aimant permanent et la pièce de dérivation de flux magnétique, utilisées sur des stators connus.

De plus l'invention permet d'avoir la portion aimantée et la portion de dérivation de flux parfaitement solidarisées, sans risque de jeu entre elles.

Enfin l'invention permet une certaine souplesse dans le choix et le dosage des matériaux pour réaliser la structure aimantée, en vue notamment d'améliorer les propriétés agissant à vide et les caractéristiques électromagnétiques de l'inducteur, notamment sa capacité de protection contre la démagnétisation.

Avantageusement, l'une au moins des première et deuxième portions de la structure aimantée est frittée. De préférence les première et deuxième portions sont toutes les deux frittées.

Dans un exemple de mise en oeuvre de l'invention, les première et deuxième portions de la structure aimantée sont jointes par une jonction issue d'un frittage.

La structure aimantée selon l'invention peut ainsi être fabriquée de manière relativement simple, notamment sans apport de matière autre que celles utilisées pour réaliser les deux portions.

En variante, les première et deuxième portions sont fixées l'une sur l'autre par collage à l'aide d'un adhésif, ou à l'aide d'une enveloppe solidarisant les première et deuxième portions, avant la mise en place de la structure aimantée sur la culasse, en vue de former la structure monobloc.

Dans un exemple de mise en oeuvre de l'invention, la structure aimantée comporte une seule portion de dérivation de flux formant un bord longitudinal de la structure aimantée.

En variante, la structure aimantée comporte deux portions de dérivation de flux de part et d'autre de la première portion aimantée.

Le cas échéant, les première et deuxième portions s'étendent sur une même hauteur.

En variante, les première et deuxième portions peuvent présenter des hauteurs différentes.

Dans un exemple de mise en oeuvre de l'invention, la structure aimantée est assemblée sur la culasse à l'aide d'au moins un ensemble support, notamment une agrafe. Deux structures aimantées successives sont par exemple séparées par une agrafe de fixation.

La première portion aimantée de la structure peut par exemple être réalisée en ferrite ou, en variante, en terre rare.

Cette première portion est avantageusement réalisée à partir d'une poudre anisotrope avec une anisotropie choisie pour renforcer la direction de polarisation de l'aimant.

La deuxième portion de dérivation de flux peut par exemple être réalisée en acier doux à faible pourcentage de carbone.

L'invention a également pour objet une machine électrique tournante, notamment un démarreur de véhicule automobile, comportant un stator tel défini ci-dessus.

L'invention concerne également une structure aimantée monobloc pour une culasse de machine électrique tournante, comportant :
o au moins une première portion aimantée réalisée dans un premier matériau, notamment un matériau ferromagnétique dur, et apte à générer un champs magnétique,
o au moins une deuxième portion de dérivation de flux réalisée dans un deuxième matériau, notamment un matériau ferromagnétique doux, différent du premier.

L'invention a encore pour objet un procédé de fabrication d'un stator tel que défini ci-dessus, comportant l'étape suivante :
- fabriquer l'une au moins des première et deuxième portions par frittage.

Dans un exemple de mise en oeuvre de l'invention, le procédé comporte les étapes suivantes :
- réaliser une préforme de la première portion aimantée de la structure aimantée, notamment par pressage,
- réaliser une préforme de la deuxième portion de dérivation de flux, notamment par pressage,
- disposer les préformes de manière adjacente dans une matrice,
- réaliser le frittage des préformes pour obtenir la structure aimantée.

En variante, le procédé comporte les étapes suivantes :
- réaliser une préforme de l'une des première et deuxième portions de la structure aimantée, notamment par pressage,
- disposer la préforme dans une matrice,
- déposer dans la matrice du matériau, notamment sous forme de poudre, pour former l'autre des première et deuxième portions de la structure aimantée,
- réaliser le frittage de la préforme et du matériau pour obtenir la structure aimantée.

En variante encore, le procédé comporte les étapes suivantes :
- déposer dans une matrice des matériaux, notamment sous forme de poudres, pour former les première et deuxième portions de la structure aimantée,
- réaliser le frittage des matériaux pour obtenir la structure aimantée.

Notamment lorsque la première portion aimantée est réalisée en terre rare, il est possible d'utiliser un mélange d'une poudre magnétique avec un liant organique pour améliorer la jonction entre les première et deuxième portions de la structure aimantée.

Dans un exemple de mise en oeuvre de l'invention, la deuxième portion est formée par un insert, par exemple un insert métallique, avec, le cas échéant, des formes d'accrochage telles que par exemple des stries, pour améliorer la jonction avec la première portion réalisée par frittage.

Le cas échéant, le procédé comporte l'étape suivante :
- meuler au moins une surface de la structure aimantée en vue de lui conférer sa forme définitive.

L'invention pourra être mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, un démarreur conforme à un exemple de mise en oeuvre de l'invention,
- la figure 2 représente, schématiquement et partiellement, en perspective, un stator du démarreur de la figure 1,
- les figures 3 et 4 illustrent, schématiquement et partiellement, en coupe, deux exemples de structures aimantées du stator de la figure 2,
- la figure 5 est un schéma bloc illustrant différentes étapes d'un procédé de fabrication d'une structure aimantée conforme à un exemple de mise en oeuvre de l'invention,
- la figure 6 est une vue en coupe, schématique et partielle, d'une matrice pour la mise en oeuvre du procédé de la figure 5,
- la figure 7 est un schéma bloc illustrant différentes étapes d'un procédé de fabrication d'une structure aimantée conforme à un autre exemple de mise en oeuvre de l'invention,
- la figure 8 est une vue en coupe, schématique et partielle, d'une matrice pour la mise en oeuvre du procédé de la figure 7,
- la figure 9 est un schéma bloc illustrant différentes étapes d'un procédé de fabrication d'une structure aimantée conforme à encore un autre exemple de mise en oeuvre de l'invention,
- la figure 10 est une vue en coupe, schématique et partielle, d'une matrice pour la mise en oeuvre du procédé de la figure 9, et
- la figure 11 représente, schématiquement et partiellement, en coupe, un autre exemple de structure aimantée selon l'invention.

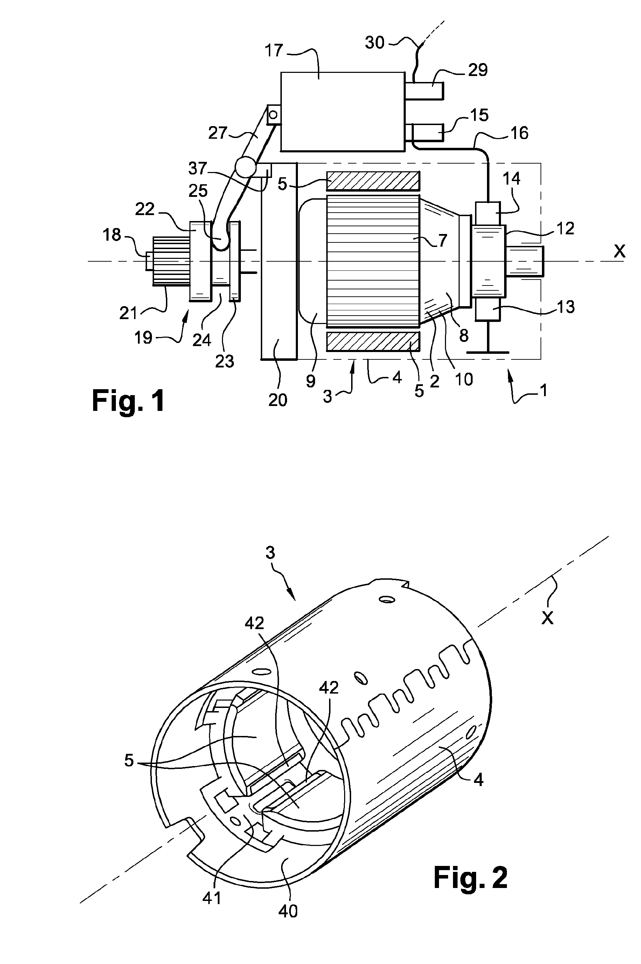

On a représenté sur la figure 1 un démarreur 1 pour moteur à combustion de véhicule automobile.

Ce démarreur 1 comprend, d'une part, un rotor 2, encore appelé induit, pouvant tourner autour d'un axe X, et d'autre part, un stator 3, encore appelé inducteur.

Ce stator 3 comporte une culasse 4 portant une pluralité de structures aimantées 5.

Le rotor 2 comporte un corps de rotor 7 et un bobinage 8 enroulé dans des encoches du corps de rotor 7.

Le démarreur 1 peut être du type six pôles aimants par exemple.

Le bobinage 8 forme, de part et d'autre du corps de rotor 7, un chignon avant 9 et un chignon arrière 10.

Le rotor 2 est pourvu, à l'arrière, d'un collecteur 12 comprenant une pluralité de pièces de contact connectées électriquement aux éléments conducteurs, formés dans l'exemple considéré par des fils, du bobinage 8.

Un groupe de balais 13 et 14 est prévu pour l'alimentation électrique du bobinage 8, l'un des balais 13 étant relié à la masse du dispositif 1 et un autre des balais 14 étant relié à une borne électrique 15 d'un contacteur 17 via un fil 16. Les balais sont par exemple au nombre de quatre.

Les balais 13 et 14 viennent frotter sur le collecteur 12 lorsque le rotor 2 est en rotation.

Le démarreur 1 comporte en outre un ensemble lanceur 19 monté de manière mobile axialement sur un arbre d'entraînement 18 et pouvant être entraîné en rotation autour de l'axe X par le rotor 2.

Un ensemble réducteur de vitesses 20 est interposé entre le rotor 2 et l'arbre d'entraînement 18, de manière connue en soi.

L'ensemble lanceur 19 comporte un élément d'entraînement formé par une poulie 21 et destiné à s'engager sur un organe d'entraînement du moteur à combustion, non représenté. Cet organe d'entraînement est par exemple une courroie.

La poulie 21 peut être remplacée par un élément d'engrenage, notamment une roue dentée, pour entraîner le moteur à combustion.

L'ensemble lanceur 19 comprend en outre une roue libre 22 et une rondelle poulie 23 définissant entre elles une gorge 24 pour recevoir l'extrémité 25 d'une fourchette 27.

La roue libre peut être du type à galet, comme utilisé habituellement dans des démarreurs connus.

La rondelle poulie est réalisée par exemple en acier, et peut être soudée ou sertie sur la roue libre, ou en variante être réalisée d'un seul tenant avec la roue libre.

La fourchette 27, réalisée par exemple par moulage d'une matière plastique, est montée pivotante sur un support pivot 37.

Cette fourchette 27 est actionnée par le contacteur 17 pour déplacer l'ensemble lanceur 19 par rapport à l'arbre d'entraînement 18, suivant l'axe X, entre une première position dans laquelle l'ensemble lanceur 19 entraîne le moteur à combustion par l'intermédiaire de la poulie 21, comme illustré sur la figure 1, et une deuxième position, non représentée, dans laquelle l'ensemble lanceur 19 est désengagé du moteur à combustion.

Le contacteur 17 comprend, outre la borne 15 reliée au balai 14, une borne 29 reliée via un élément de liaison électrique, notamment un fil 30, à une alimentation électrique du véhicule, notamment une batterie.

Le stator 3 est maintenant décrit plus en détail en référence aux figures 2 à 4.

La culasse 4, de forme cylindrique de révolution, est réalisée par exemple par roulage d'une tôle d'épaisseur comprise notamment entre 1.5 mm et 2.5 mm et dont les bords sont assemblés par des formes imbriquées.

Les structures aimantées 5 sont montées sur la paroi intérieure 40 de la culasse 4 par l'intermédiaire d'un ensemble support 41.

Dans l'exemple décrit, l'ensemble support 41, réalisé par découpe et pliage d'une tôle, comporte des pattes de fixation 42 pour permettre le montage des structures aimantées 5.

Ces pattes 42 s'étendent parallèlement à l'axe X, et s'appliquent contre deux bords longitudinaux 44 de chaque structure aimantée 5.

L'ensemble support 41 peut être réalisé d'un seul tenant.

En variante, l'ensemble support 41 peut comporter plusieurs pièces distinctes, par exemple sous forme d'agrafes, et chaque structure aimantée 5 est par exemple maintenue par deux agrafes consécutives.

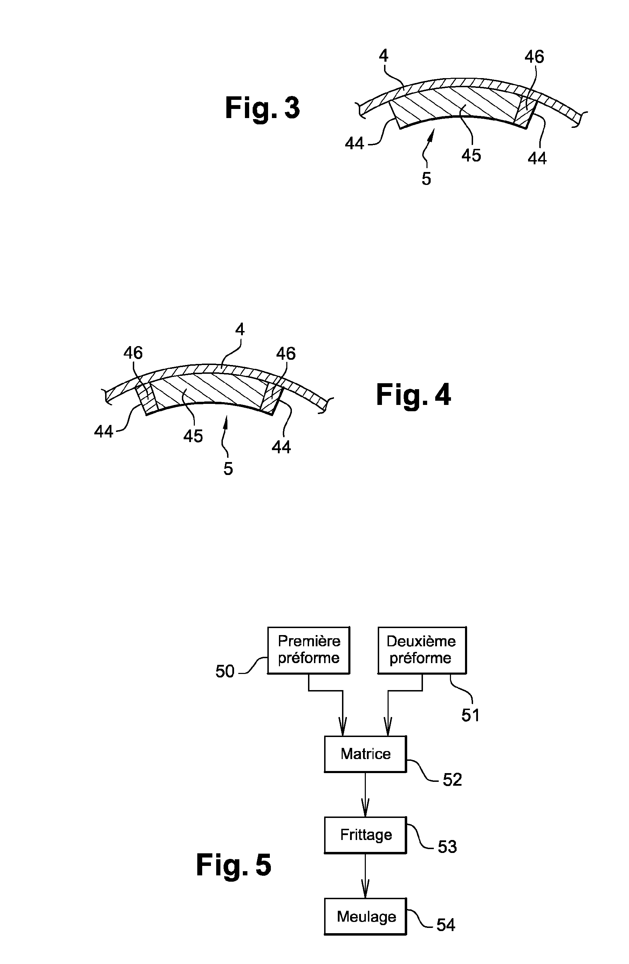

Les structures aimantées 5 sont monobloc, et comportent chacune une première portion aimantée 45 et une deuxième portion 46 de dérivation de flux, encore appelée *shunt,* comme illustré sur la figure 3.

La portion aimantée 45 est réalisée dans un matériau ferromagnétique dur, par exemple en ferrite, et la portion de dérivation de flux dans un matériau ferromagnétique doux, par exemple en acier doux à faible pourcentage de carbone.

Les portions aimantées 45 des structures aimantées 5 permettent de créer un champ magnétique qui provoque la rotation du rotor 2 lorsque le bobinage 8 est alimenté électriquement.

Les portions 56 de dérivation de flux permettent de protéger l'inducteur 3 contre le phénomène de démagnétisation et d'augmenter la vitesse de rotation à vide du démarreur 1.

Dans l'exemple illustré à la figure 3, la structure aimantée 5 comporte une seule portion 46 de dérivation de flux magnétique, laquelle portion s'étend sur un côté de la structure 5, le long d'un bord longitudinal 44.

Les portions 45 et 46 sont formées par des secteurs de cylindre d'axe X.

En variante, comme illustré sur la figure 4, la structure aimantée 5 comporte deux portions 46 de dérivation de flux, de part et d'autre de la portion aimantée 45.

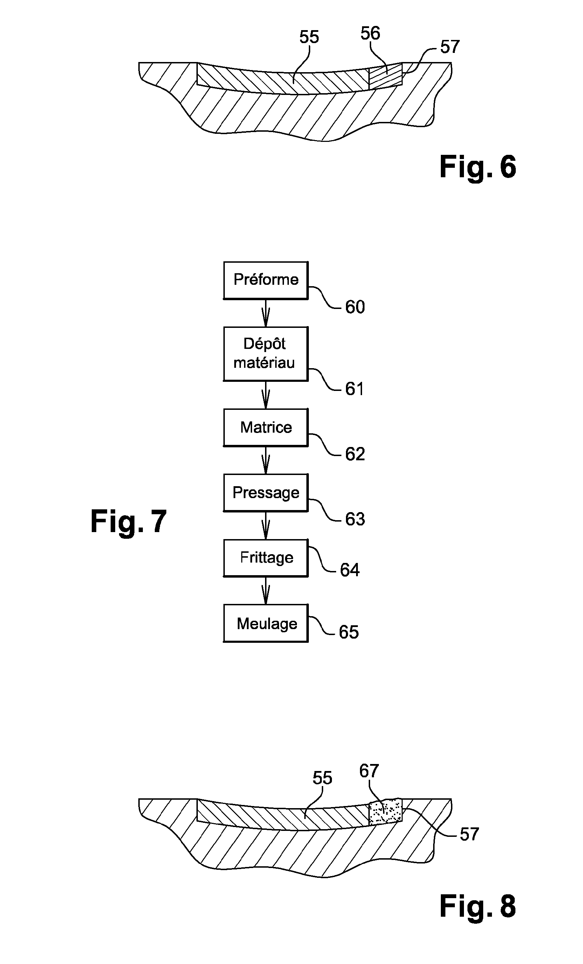

Un premier exemple de procédé de fabrication des structures aimantées 5 selon la figure 3 est décrit en référence aux figures 5 et 6.

Dans cet exemple, le procédé comporte des étapes 50 et 51 de fabrication respectivement d'une préforme 55 de la portion aimantée 45 et d'une préforme 56 de la portion 46 de dérivation de flux.

Les préformes 55 et 56 sont respectivement réalisées par pressage d'une poudre.

A l'étape 52, les préformes 55 et 56 sont disposées dans une matrice 57, comme illustré sur la figure 6.

A l'étape 53, le frittage des préformes 55 et 56 est réalisé par apport de chaleur à la matrice 57, et éventuellement de pression.

A l'issue de cette étape 53, les portions 45 et 46 correspondant respectivement aux préformes 55 et 56 sont liées l'une à l'autre de manière à former une structure monobloc 5.

Une opération de finition 54, notamment un meulage de la structure 5, peut être réalisée afin d'obtenir des dimensions ajustées.

On a représenté en référence aux figures 7 et 8 un autre exemple de procédé de fabrication de la structure 5.

Dans une première étape 60, est réalisée par pressage d'une poudre une préforme 55 de la portion aimantée 45, comme dans l'étape 50 de l'exemple précédent.

En variante, au lieu de réaliser la préforme 55 de la portion aimantée 45, il est possible de réaliser la préforme 56 de la portion 46 de dérivation de flux.

A l'étape 61, la préforme 55 est déposée dans une matrice 57.

Puis, à l'étape 62, un matériau sous la forme d'une poudre 67 est déposé dans l'espace disponible de la matrice 57 laissée par la préforme 55.

Cette poudre 67 est destinée à former, après pressage (étape 63) et frittage (étape 64), la portion 46 de dérivation de flux.

Une opération de meulage 65 de la structure 5 peut être conduite pour la finition.

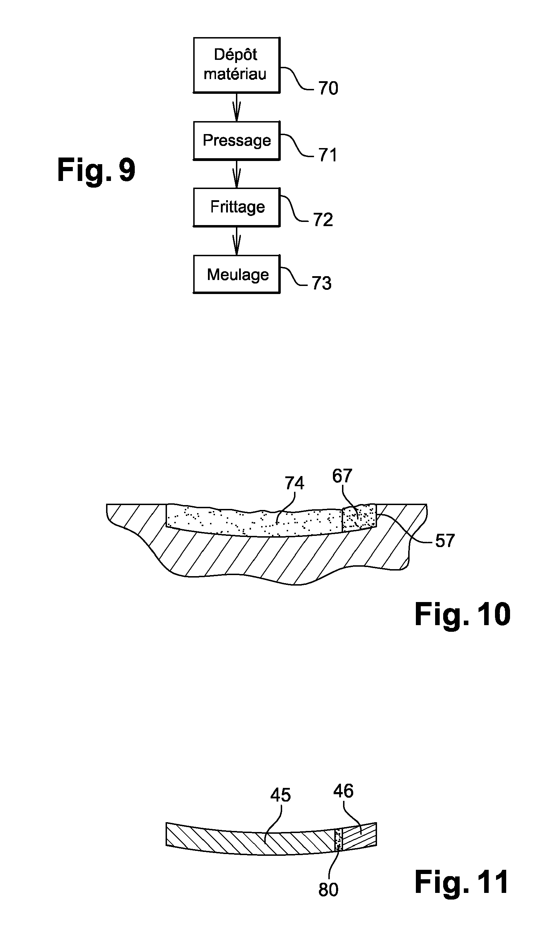

Un autre exemple de procédé de fabrication est illustré en référence aux figures 9 et 10.

Dans cet exemple, aucune préforme n'est réalisée préalablement.

Dans une étape 70, des poudres 74 et 67 correspondant respectivement aux matériaux des portions 55 et 56 de la structure aimantée 5, sont déposées dans la matrice 57.

Puis des opérations de pressage (étape 71) et de frittage (étape 72) des poudres 74 et 67 sont réalisées de manière à obtenir une structure aimantée 5 monobloc.

Une opération de meulage 73 permet une finition de la structure aimantée 5.

Bien entendu, l'invention n'est pas limitée aux exemples de mise en oeuvre qui viennent d'être décrits.

Par exemple, les portions aimantées 45 et de dérivation de flux 46 peuvent être liées ensemble par collage à l'aide d'un adhésif 80, après leur fabrication séparée, pour former une structure monobloc, comme illustré sur la figure 11.

En variante encore, une portion aimantée 45 et une portion de dérivation de flux 46 peuvent être liées à l'aide d'une enveloppe pour former la structure 5.

Cette enveloppe est réalisée en matériau amagnétique.

## Revendications

1. Stator (3) pour machine électrique tournante, notamment un démarreur (1) de véhicule automobile, comportant :
- une culasse (4),
- au moins une structure aimantée (5) monobloc portée par la culasse et comportant :
o au moins une première portion aimantée (45) réalisée dans un premier matériau, notamment un matériau ferromagnétique dur, et apte à générer un champs magnétique,
o au moins une deuxième portion de dérivation de flux (46) réalisée dans un deuxième matériau, notamment un matériau ferromagnétique doux, différent du premier.

2. Stator selon la revendication précédente, **caractérisé par le fait que** l'une au moins des première et deuxième portions (45, 46) de la structure aimantée est frittée.

3. Stator selon l'une des deux revendications précédentes, **caractérisé par le fait que** les première et deuxième portions (45, 46) de la structure aimantée sont jointes par une jonction issue d'un frittage.

4. Stator selon l'une quelconque des revendications précédentes, **caractérisé par le fait que** la structure aimantée (5) comporte une seule portion de dérivation de flux (46) formant un bord longitudinal (44) de la structure aimantée.

5. Stator selon l'une quelconque des revendications 1 à 3, **caractérisé par le fait que** la structure aimantée (5) comporte deux portions de dérivation de flux (46) de part et d'autre de la première portion aimantée (45).

6. Stator selon l'une quelconque des revendications précédentes, **caractérisé par le fait que** la première portion aimantée (45) de la structure est réalisée partir d'une poudre magnétique anisotrope.

7. Stator selon l'une quelconque des revendications précédentes, **caractérisé par le fait que** la première portion aimantée est réalisée en ferrite.

8. Stator selon l'une quelconque des revendications précédentes, **caractérisé par le fait que** la deuxième portion de dérivation de flux (46) est réalisée en acier doux.

9. Machine électrique tournante (1), notamment un démarreur de véhicule automobile, comportant un stator (3) selon l'une quelconque des revendications précédentes.

10. Structure aimantée monobloc (5) pour une culasse de machine électrique tournante, comportant :
o au moins une première portion aimantée (45) réalisée dans un premier matériau, notamment un matériau ferromagnétique dur, et apte à générer un champs magnétique,
o au moins une deuxième portion de dérivation de flux (46) réalisée dans un deuxième matériau, notamment un matériau ferromagnétique doux, différent du premier.

11. Procédé de fabrication d'un stator selon l'une quelconque des revendications 1 à 8, comportant l'étape suivante :
- fabriquer l'une au moins des première et deuxième portions (45, 46) par frittage.

12. Procédé selon la revendication précédente, comportant les étapes suivantes :
- réaliser une préforme (55) de la première portion aimantée (45) de la structure aimantée, notamment par pressage,
- réaliser une préforme (56) de la deuxième portion de dérivation de flux (46), notamment par pressage,
- disposer les préformes de manière adjacente dans une matrice (57),
- réaliser le frittage des préformes pour obtenir la structure aimantée.

13. Procédé selon la revendication 11, comportant les étapes suivantes :
- réaliser une préforme (55) de l'une des première et deuxième portions de la structure aimantée, notamment par pressage,
- disposer la préforme dans une matrice (57),
- déposer dans la matrice du matériau (67), notamment sous forme de poudre, pour former l'autre des première et deuxième portions de la structure aimantée,
- réaliser le frittage de la préforme et du matériau pour obtenir la structure aimantée (5).

14. Procédé selon la revendication 11, comportant les étapes suivantes :
- déposer dans une matrice des matériaux (67, 74), notamment sous forme de poudres, pour former les première et deuxième portions de la structure aimantée,
- réaliser le frittage des matériaux pour obtenir la structure aimantée.

15. Procédé selon l'une quelconque des revendications 11 à 14, comportant l'étape suivante :
- meuler au moins une surface de la structure aimantée (5) en vue de lui conférer sa forme définitive.
